# EUROPÄISCHE PATENTSCHRIFT

(11) **EP 3 520 350 B1**
(45) Veröffentlichungstag und Bekanntmachung des Hinweises auf die Patenterteilung: **09.12.2020**
(21) Anmeldenummer: 17761847.7
(22) Anmeldetag: 28.08.2017
(51) Int. Cl.: H04L 29/06

(54) **MANIPULATIONSSICHERES SPEICHERN EINER PROZESSGRÖSSE IN EINEM AUTOMATISIERUNGSSYSTEM**
SYSTEM AND METHOD FOR DETERMINING OR MONITORING A PROCESS VARIABLE IN AN AUTOMATION PLANT
SYSTÈME ET PROCÉDÉ DE DÉTERMINATION OU DE SURVEILLANCE D'UNE GRANDEUR DE PROCESSUS DANS UNE INSTALLATION DU DOMAINE DE L'AUTOMATISATION

(30) Priorität: 30.09.2016 DE 102016118613
(43) Veröffentlichungstag der Anmeldung: 07.08.2019
(73) Patentinhaber: Endress+Hauser Process Solutions AG, 4153 Reinach (CH)
(72) Erfinder: MANEVAL, Michael, 79650 Schopfheim (DE); MAYER, Michael, 4104 Oberwil (CH); SOTRIFFER, Ingomar, D-79194 Gundelfingen (DE)
(74) Vertreter: Andres, Angelika Maria
(86) Internationale Anmeldenummer: PCT/EP2017/071537
(87) Internationale Veröffentlichungsnummer: WO 2018/059850

(56) Entgegenhaltungen:
- EP-A2- 2 966 520
- WO-A1-2011/154212
- FENG TIAN: "An agri-food supply chain traceability system for China based on RFID & blockchain technology", 2016 13TH INTERNATIONAL CONFERENCE ON SERVICE SYSTEMS AND SERVICE MANAGEMENT (ICSSSM), IEEE, 24. Juni 2016 (2016-06-24), Seiten 1-6, XP032943118, DOI: 10.1109/ICSSSM.2016.7538424 [gefunden am 2016-08-09]
- DAVID AUDET ET AL: "Scheduling recurring tasks in energy harvesting sensors", COMPUTER COMMUNICATIONS WORKSHOPS (INFOCOM WKSHPS), 2011 IEEE CONFERENCE ON, IEEE, 10. April 2011 (2011-04-10), Seiten 277-282, XP031949924, DOI: 10.1109/INFCOMW.2011.5928823 ISBN: 978-1-4577-0249-5

## Beschreibung

Die Erfindung betrifft ein System zum Bestimmen oder Überwachen einer Prozessgröße in einer Anlage der Automatisierungstechnik. Des Weiteren umfasst die Erfindung ein Verfahren zum Bestimmen oder Überwachen einer Prozessgröße in einer Anlage der Automatisierungstechnik.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Daten, bzw. Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus®, Foundation® Fieldbus, HART®, etc.) mit übergeordneten Einheiten verbunden. Normalerweise handelt es sich bei den übergeordneten Einheiten um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Systeme mit an übergeordnete Einheiten angeschlossene Feldgeräten, mit Sensoren, oder Aktoren, zur Steuerung von Industrieanlagen sind aus der Druckschrift EP2 966 520-A2 bekannt, aber auch aus wissenschaftlichen Artikeln, wie zum Beispiel Feng Tian's IEEE Pubilkation vom 24. Juni 2016 mit dem Titel 'An Agri-Food Supply Chain Traceability System for China Based on RFID & Blockchain Technology', oder David Audet et al.'s IEEE Publikation vom 19. April 2011 mit dem Titel 'Scheduling Recurring Tasks in Energy Harvesting Sensors'.

Feldgeräte erstellen eine Vielzahl unterschiedlicher Daten. Bei diesen Daten handelt es neben bereits oben genannten Messdaten von Sensoren, durch welche ein Anlagenbetreiber Informationen über die aktuellen Prozesswerte der Messstellen seiner Anlage erhält, beispielsweise um Steuerdaten, bspw. zur Stellregelung eines Aktors. Des Weiteren handelt es sich bei den Daten um Diagnose-, Historien-, und/oder Statusdaten, durch die der Anlagenbetreiber über Probleme der Feldgeräte, bzw. dem aktuellen Status der einzelnen Feldgeräte informiert wird, oder um Kalibrier-/Parametrierdaten.

Heutzutage ist es üblich, diese Daten an einer zentralen Stelle in der Anlage zu speichern, beispielsweise in einer Datenbank in einem Workstation-PC in der Leitebene der Anlage. Dies jedoch mit Nachteilen verbunden: Fällt die Datenbank aus, bzw. wird die Datenbank zerstört, bzw. unlesbar, so sind die auf dieser Datenbank gespeicherten Daten verloren.

Des Weiteren sind die Daten manipulierbar, da sie häufig unverschlüsselt über das Kommunikationsnetzwerk gesendet werden, bzw. unverschlüsselt auf der Datenbank abgelegt werden. Werden Daten im Nachhinein manipuliert, so kann dies nur sehr schwer nachverfolgt werden, bzw. aufgrund der Vielzahl an gespeicherten Daten mitunter erst sehr spät bemerkt werden. Ausgehend von dieser Problematik liegt der Erfindung liegt die Aufgabe zugrunde, ein Verfahren und ein System vorzustellen, welches es erlaubt, Daten einer Vielzahl von Feldgeräten in einer Anlage der Prozessautomatisierung auf (manipulations)sichere Art und Weise zu speichern.

Die Aufgabe wird durch ein System zum Bestimmen oder Überwachen einer Prozessgröße in einer Anlage der Automatisierungstechnik gelöst, mit zumindest einer übergeordneten Einheit und einer Vielzahl von Feldgeräten, welche jeweils einen Sensor und/oder Aktor und eine Elektronikeinheit aufweisen, wobei die Feldgeräte Daten generieren, bei denen es sich insbesondere um Messdaten, Steuerdaten, Kalibrier-/Parametrierdaten, Diagnose-, Historien- und/oder Statusdaten handelt, wobei die Feldgeräte über ein drahtloses oder drahtgebundenes Kommunikationsnetzwerk miteinander in Kommunikationsverbindung stehen, und wobei die übergeordnete Einheit und die Feldgeräte Teilnehmerknoten entsprechend einer Distributed Ledger, bzw. Blockchain-Technologie darstellen, wie im Anspruch 1 beschrieben.

In dem erfindungsgemäßen System werden die von den Feldgeräten erzeugten Daten somit dezentral auf einer Vielzahl von Datenbanken gespeichert. Es ist dabei vorgesehen, dass auf allen Datenbanken zu allen Zeitpunkten dieselben Daten gespeichert und verfügbar sind. Fallen eine oder mehrere Datenbanken aus, bzw. werden durch einen Angreifer manipuliert, so können die Daten, bzw. Informationen aus den restlichen Datenbanken ausgelesen werden, wodurch ein vollständiger Datenverlust so gut wie unmöglich ist.

Neben dem Aspekt des dezentralen Speicherns weist das erfindungsgemäße System den großen Vorteil auf, dass die Daten manipulationssicher auf den Datenbanken in Form von Datenblöcken gespeichert sind. Vor der Erstellung eines solchen Datenblocks werden die Transaktionen von allen Feldgeräten und übergeordneten Einheiten, zusammenfassend als Teilnehmerknoten bezeichnet, auf Validität überprüft. Hierbei wird insbesondere geprüft, ob der Ersteller der Transaktion - also in der Regel das Feldgerät, welches die jeweiligen Daten, welche in der Transaktion enthalten sind, generiert - ein gültiger Teilnehmerknoten ist, bzw. dass die in der Transaktion enthaltenen Daten beispielsweise in einem gültigen Wertebereich liegen. Dadurch wird verhindert, dass Teilnehmerknoten eingeschleust werden, welche vom Anlagenbetreiber nicht vorgesehen sind und welche den Zustand der Anlage gefährden könnten.

Eine zusätzliche Stufe der Manipulationssicherheit wird dadurch erreicht, dass die Datenblöcke selbst von einer vorgegebenen Anzahl von Teilnehmerknoten validiert werden, bevor die Datenblöcke in den Datenbanken gespeichert werden. Insbesondere wird hierzu eine erfolgreiche Validierung von mehr als der Hälfte aller Teilnehmerknoten benötigt. Ein Angreifer müsste daher zum Einschleusen eines fremden, schädlichen Datenblocks eine große Anzahl an Teilnehmerknoten manipulieren, bzw. kontrollieren, um den eingeschleusten Datenblock erfolgreich zu validieren. Bei steigender Anzahl an Teilnehmerknoten ist dies als so gut wie unmöglich anzusehen.

Feldgeräte, welche im Zusammenhang mit der Erfindung genannt werden, sind bereits im einleitenden Teil der Beschreibung beispielhaft beschrieben.

Gemäß einer besonders bevorzugten Ausgestaltung des erfindungsgemäßen Systems ist vorgesehen, dass der Datenblock entsprechend einem Datenblock der Blockchain-Technologie ausgestaltet ist und entsprechend der Blockchain-Technologie mit zu früheren Zeitpunkten erstellten Datenblöcken verknüpft ist. Der Datenblock ist hierbei derart ausgestaltet, dass dieser einen Datenbereich und eine Prüfsumme in Form eines Hashwerts aufweist. Der Datenbereich enthält sämtliche Transaktionen, welche nach dem Zeitpunkt des Erstellens des letzten Datenblocks generiert wurden. Diese Transaktionen werden über einen Algorithmus zu einem Zwischenwert verrechnet, beispielsweise wird die "Merkle Root" aller im Datenbereich des Datenblocks enthaltenen Transaktionen errechnet. Der Hashwert des Datenblocks wird aus diesem Zwischenwert und dem Hashwert des vorangehenden Datenblocks erzeugt.

Die Validierung des Datenblocks erfolgt derart, dass dessen Hashwert überprüft wird. Nur wenn der gültige Hashwert des vorherigen Datenblocks verwendet wird, kann der Datenblock erfolgreich validiert werden. Dies führt dazu, dass Daten in einem erfolgreich validierten Datenblock nicht geändert werden können, ohne die nachfolgenden Datenblöcke dementsprechend zu verändern. Eine Änderung von Daten erzeugt einen geänderten Zwischenwert, wodurch auch der Hashwert des jeweiligen Datenblocks verändert wird. Der darauffolgende Datenblock passt somit nicht mehr zu seinem vorherigen Datenblock. Daten eines einmal erfolgreich validierten Datenblocks sind dadurch für einen Angreifer nicht mehr veränderbar.

Gemäß einer vorteilhaften Weiterbildung des erfindungsgemäßen Systems ist vorgesehen, dass die Blockerstellungseinheit in der übergeordneten Einheit implementiert ist. Da zur Erstellung eines Datenblocks wie oben beschrieben aufwendige Algorithmen ausgeführt werden, ist es vorteilhaft, diese Blockerstellung in einer Komponente der Anlage auszuführen, welcher genügend Rechenleistung und eine zur Datenblockerstellung ausreichende Energieversorgung zur Verfügung steht. Feldgeräte, welche insbesondere als Zweidraht-Feldgerät ausgestaltet sind, erhalten ihre Energie häufig über das Kommunikationsnetzwerk. Die Energiemenge, welche dem Feldgerät auf diese Art und Weise zur Verfügung gestellt wird, ist mitunter sehr gering. Eine übergeordnete Einheit, welche beispielsweise eine Steuereinheit oder eine Überwachungseinheit darstellt, besitzt häufig eine externe Stromversorgung und dadurch ausreichend zu Verfügung stehende elektrische Energie.

Eine vorteilhafte Ausgestaltung des erfindungsgemäßen Systems sieht vor, dass in jedem Teilnehmerknoten jeweils eine der dezentral verteilten Datenbanken angeordnet ist. Die Datenbanken erhalten zu jedem Zeitpunkt alle Datenblöcke, so dass alle Datenbanken über die identische Datenmenge verfügen. Für die Datenbanken kommen insbesondere nichtflüchtige Speicher, wie Festplatten oder Solid-State-Drives (SSD), oder auf Flash-Speichern basierende Medien wie beispielsweise Speicherkarten oder Speichersticks zum Einsatz.

In einer weiteren vorteilhaften Ausgestaltung des erfindungsgemäßen Systems ist vorgesehen, dass es sich bei der übergeordneten Einheit um eine Steuereinheit, insbesondere um eine speicherprogrammierbare Steuerung, oder um einen Workstation-PC in der Leitebene der Anlage handelt.

Gemäß einer bevorzugten Ausgestaltung des erfindungsgemäßen Systems umfasst das System zusätzliche Teilnehmerknoten in Form von Gateways, Remote-Input/Output-Einheiten, und/oder Edge Devices, welche eine Blockerstellungseinheit und/oder eine Validierungseinheit enthalten. Hierdurch ist es möglich, auch Anlagen, welche ältere übergeordnete Einheiten, die nicht die zur Blockerstellung erforderliche Leistung besitzen, auf einfache Art und Weise aufzurüsten, indem ein zusätzliches Gerät in der Anlage implementiert wird. Der Anlagenbetreiber ist dadurch nicht gezwungen, Komponenten der Leitebene zu ersetzen, bzw. aufzurüsten, wodurch sich die Zusatzkosten für den Anlagenbetreiber in Grenzen halten.

Gemäß einer vorteilhaften Ausgestaltung des erfindungsgemäßen Systems ist vorgesehen, dass die Transaktionserstellungseinheiten in den Elektronikeinheiten der Feldgeräte integriert sind oder die Feldgeräte modulare Zusatzelektronikeinheiten, insbesondere Steckmodule, aufweisen, in welchen die Transaktionserstellungseinheiten implementiert sind. Im Gegensatz zur Erstellung eines Datenblocks, für welchen mitunter aufwendige Rechenoperationen notwendig sind, benötigt die Erstellung einer Transaktion erheblich weniger Leistung, so dass die Feldgeräte keine zusätzliche Stromversorgung besitzen müssen und auch über das Kommunikationsnetzwerk mit Energie versorgt werden können.

In modernen Feldgeräten, welche über einen Mikroprozessor und einen beschreibbaren Speicher verfügen, kann die Transaktionserstellungseinheit auch durch diese Elektronikkomponenten ausgebildet werden. Die hierfür benötigten Algorithmen/Softwarebefehle können hierfür beispielsweise in Form eines Firmwareupdates auf den beschreibbaren Speicher geladen werden.

Älteren Feldgeräten, bei denen ein solches Update nicht möglich ist, bzw. deren Leistung zu gering zur Implementierung der Transaktionserstellungseinheit mittels deren proprietärer Elektronikkomponenten ist, kann eine Zusatzelektronikeinheit hinzugefügt werden, auf welcher die Transaktionserstellungseinheit vorgesehen ist.

Gemäß einer besonders vorteilhaften Ausgestaltung des erfindungsgemäßen Systems ist vorgesehen, dass die Validierungseinheiten in den Elektronikeinheiten der Feldgeräte und in der übergeordneten Einheit integriert sind, oder die Feldgeräte und/oder die übergeordnete Einheit modulare Zusatzelektronikeinheiten, insbesondere Steckmodule, aufweisen, in welchen die Transaktionserstellungseinheiten implementiert sind. Analog zur Erstellung von Transaktionen benötigt das Validieren von Transaktionen und/oder Datenblöcken im Gegensatz zur Erstellung eines Datenblocks erheblich weniger Leistung, so dass die Feldgeräte keine zusätzliche Stromversorgung besitzen müssen und auch über das Kommunikationsnetzwerk mit Energie versorgt werden können.

In modernen Feldgeräten, welche über einen Mikroprozessor und einen beschreibbaren Speicher verfügen, kann die Validierungseinheit auch durch diese Elektronikkomponenten ausgebildet werden. Die hierfür benötigten Algorithmen/Softwarebefehle können hierfür beispielsweise in Form eines Firmwareupdates auf den beschreibbaren Speicher geladen werden.

Älteren Feldgeräten, bei denen ein solches Update nicht möglich ist, bzw. deren Leistung zu gering zur Implementierung der Validierungseinheit mittels deren proprietärer Elektronikkomponenten ist, kann eine Zusatzelektronikeinheit hinzugefügt werden, auf welcher die Transaktionserstellungseinheit vorgesehen ist.

Eine bevorzugte Weiterbildung des erfindungsgemäßen Systems sieht vor, dass sich die Transaktionserstellungseinheiten und die Validierungseinheiten der Feldgeräte in einer gemeinsamen Elektronikeinheit, bzw. in einer gemeinsamen Zusatzelektronikeinheit befinden. Der Platzbedarf wird dadurch reduziert, bzw. wird die Effizienz durch zusammenhängende Elektronikkomponenten erhöht.

Einer weitere bevorzugte Weiterbildung des erfindungsgemäßen Systems sieht vor, dass die Feldgeräte jeweils eine Energieversorgungseinheit aufweisen, welche die Feldgeräte, insbesondere die Elektronikeinheit der Feldgeräte, mittels Energie, welche über das Kommunikationsnetzwerk gewonnenen wird, versorgt.

Eine besonders vorteilhafte Ausgestaltung des erfindungsgemäßen Systems sieht vor, dass die Feldgeräte jeweils eine Energiespeichereinheit aufweisen, welche Energie aus der Umgebung aufnimmt und speichert und/oder Energie bereitstellt, und die Feldgeräte, insbesondere die Elektronikeinheit der Feldgeräte, mit der gespeicherten, bzw. bereitgestellten Energie versorgt. Eine erste Variante des erfindungsgemäßen Systems sieht vor, dass die Energiespeichereinheit derart ausgestaltet ist, um Energie über das Kommunikationsnetzwerk aufzunehmen. Die aufgenommene Energie wird hierbei in der Energiespeichereinheit zwischengespeichert. Es kann vorgesehen sein, die zwischengespeicherte Energie dann der Elektronikeinheit des Feldgeräts zur Verfügung zu stellen, wenn die zwischengespeicherte Energiemenge einen vorbestimmten Wert überschreitet, bzw. wenn der Energiespeicher komplett aufgeladen ist.

Eine zweite Variante des erfindungsgemäßen Systems sieht vor, dass die Energiespeichereinheit eine Solarzelle, eine Brennstoffzelle und/oder eine, insbesondere wiederaufladbare, Batterie umfasst. Die Energiespeichereinheit ist hierbei unabhängig von dem Kommunikationsnetzwerk.

Es versteht sich von selbst, dass außer der Umwandlung von Solarenergie in elektrische Energie auch weitere physikalische Prinzipien zur Gewinnung von Energie aus der Umgebung verwendet werden können, bspw. durch Umwandlung von Vibration in elektrische Energie, durch Umwandlung von magnetisch Feldern in elektrische Energie, etc.

In einer besonders vorteilhaften Weiterbildung des erfindungsgemäßen Systems umfasst die Energiespeichereinheit zumindest einen Kondensator und/oder einen Akkumulator. Beide Bauteile erlauben eine Energiespeicherung und eine Energieausgabe, ohne dass das Bauteil komplett geladen sein muss.

Es kann dabei vorgesehen sein, die Energieversorgungseinheit mit der Energiespeichereinheit zu kombinieren. Im normalen Betriebsmodus wird das Feldgerät mit der vom Kommunikationsnetzwerk zur Verfügung gestellten Energie über die Energieversorgungseinheit versorgt. Zum Ausführen einer Zusatzfunktionalität mittels der Transaktionserstellungseinheit und/oder der Validierungseinheit erhält das Feldgerät die zusätzlich benötigte Energie über die Energiespeichereinheit.

Gemäß einer vorteilhaften Ausgestaltung des erfindungsgemäßen Systems ist vorgesehen, dass es sich bei dem Kommunikationsnetzwerk um einen Feldbus der Automatisierungstechnik handelt. Insbesondere handelt es sich hierbei um einen Feldbus mit dem Feldbusprotokoll HART, FOUNDATION Fieldbus, PROFIBUS PA, PROFIBUS DP, CANbus, Modbus, etc. Im Prinzip kann jegliches gebräuchliche Protokoll eines Feldbusses, bzw. Protokolle bezüglich Industrial Ethernet, bspw. PROFINET oder EtherNet/IP, genutzt werden.

Gemäß einer bevorzugten Weiterbildung des erfindungsgemäßen Systems ist vorgesehen, dass es sich bei dem Kommunikationsnetzwerk um ein Local-Area-Netzwerk oder um ein Wide-Area-Netzwerk, insbesondere um das Internet, handelt.

Des Weiteren wird die Aufgabe durch Verfahren zum Bestimmen oder Überwachen einer Prozessgröße in einer Anlage der Automatisierungstechnik gelöst, mit zumindest einer übergeordneten Einheit und einer Vielzahl von Feldgeräten, welche jeweils einen Sensor und/oder Aktor und eine Elektronikeinheit aufweisen, wobei die Feldgeräte Daten generieren, bei denen es sich insbesondere um Messdaten, Steuerdaten, Kalibrier-/Parametrierdaten, Diagnose- und/oder Statusdaten handelt, wobei die Feldgeräte über ein Kommunikationsnetzwerk miteinander in Kommunikationsverbindung stehen, und wobei die übergeordnete Einheit und die Feldgeräte Teilnehmerknoten darstellen, welche nach der Blockchain-Technologie funktionieren und interagieren, wie im Anspruch 13 beschrieben.

In einer vorteilhaften Ausgestaltung des erfindungsgemäßen Verfahrens ist vorgesehen, dass die erstellte Transaktion vor dem Verarbeiten in den Datenblock an alle Teilnehmerknoten übermittelt wird und von den Teilnehmerknoten validiert wird, und dass die erstelle Transaktion nur dann in den Datenblock verarbeitet wird, wenn diese von zumindest einem der Teilnehmerknoten erfolgreich validiert wird. Hierbei wird insbesondere geprüft, ob der Ersteller der Transaktion - also in der Regel das Feldgerät, welches die jeweiligen Daten, welche in der Transaktion enthalten sind, generiert - ein gültiger Teilnehmerknoten ist, bzw. dass die in der Transaktion enthaltenen Daten beispielsweise in einem gültigen Wertebereich liegen.

Gemäß einer bevorzugten Weiterbildung des erfindungsgemäßen Verfahrens ist vorgesehen, dass ein potentieller Teilnehmerknoten eine Teilnahmeanfrage an alle Teilnehmerknoten übermittelt und erst dann als neuer Teilnehmerknoten integriert wird, wenn zumindest eine vorbestimmte Anzahl von Validierungseinheiten die Teilnahmeanfrage erfolgreich validiert. Auf diese Art und Weise kann verhindert werden, dass ein unbefugtes Gerät in das Netzwerk integriert wird.

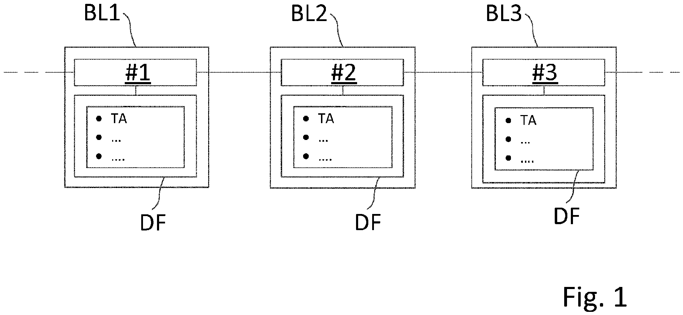

Die Erfindung wird anhand der nachfolgenden Figuren näher erläutert. Es zeigen
Fig. 1: eine Erläuterung von Datenblöcken, welche entsprechend der Blockchain-Technologie ausgestaltet sind; und
Fig: 2: ein erstes Ausführungsbeispiel des erfindungsgemäßen Systems.

Fig. 1 zeigt eine Erläuterung von Datenblöcken BL1, BL2, BL3, welche entsprechend der Blockchain-Technologie ausgestaltet sind. Die Blockchain-Technologie wurde als Backbone der Internet-Währung "Bitcoin" bekannt. Eine Blockchain, also eine Kette verknüpfter Datenblöcke BL1, BL2, BL3 erlaubt eine hohe Datenintegrität. Im Folgenden sei die Funktionsweise einer Blockchain, ausgestaltet für das erfindungsgemäße Verfahren, kurz erläutert.

Ein besagter Datenblock BL1, BL2, BL3 besteht in der Regel aus zumindest zwei Komponenten: Zum einem ist das ein Datenfeld DF. In diesem Datenfeld DF sind Daten in Form von Transaktionen TA gespeichert. Als Transaktion TA wird eine Übermittlung der Daten von einem ersten Teilnehmerknoten TK zu einem zweiten Teilnehmerknoten TK in einem Kommunikationsnetzwerk F bezeichnet. Eine Transaktion TA enthält einen übermittelten Wert, in diesem Fall also Daten, sowie den Sender und den Empfänger der Transaktion TA. Als Teilnehmerknoten TK werden alle Geräte bezeichnet, welche die Blockchain-Technologie in dem Kommunikationsnetzwerk F nutzen.

Ein Datenfeld DF eines Datenblocks BL1, BL2, BL3 enthält zumindest eine Transaktion TA, häufiger mehrere Transaktionen TA.

Zum anderen enthält ein Datenblock BL1, BL2, BL3 eine Prüfsumme #1, #2, #3. Eine solche Prüfsumme #1, #2, #3 ist ein Hashwert und wird durch mitunter aufwendige Berechnungen erstellt. Hierfür werden alle Transaktionen TA des Datenfelds eines Blocks BL1, BL2, BL3 zu einem Zwischenwert berechnet. Hierfür wird beispielsweise die Merkle-Root der Gesamtzahl der Transaktionen TA berechnet. Auf das genaue Funktionsprinzip wird an dieser Stelle nicht eingegangen. Es sei hierfür beispielsweise auf https://en.wikipedia.org/wiki/Merkle_tree verwiesen.

Dieser errechnete Zwischenwert wird anschließend mit der Prüfsumme #1, #2, #3 des vorherigen Datenblocks BL1, BL2, BL3 zur Prüfsumme #1, #2, #3 des aktuellen Datenblocks BL1, BL2, BL3 verrechnet. Beispielsweise enthält der in Fig. 1 gezeigte Datenblock BL2 eine Prüfsumme #2. Diese Prüfsumme #2 wurde also aus den in dem Datenfeld DF des Datenblocks B2 gespeicherten Transaktionen TA und der Prüfsumme #1 des vorangehenden Datenblocks BL1 berechnet. Analog dazu enthält der in Fig. 1 gezeigte Datenblock BL3 eine Prüfsumme #3. Diese Prüfsumme #3 wurde also aus den in dem Datenfeld DF des Datenblocks B3 gespeicherten Transaktionen TA und der Prüfsumme #2 des vorangehenden Datenblocks BL2 berechnet.

Die Integrität der Daten, also die Sicherung der Daten gegen nachträgliche Manipulationen, ist somit durch die Speicherung der Prüfsumme #1, #2, #3 des vorangehenden Datenblocks BL1, BL2 im jeweils nachfolgenden Datenblock BL2, BL3 gesichert. Eine Blockchain besteht also aus einer Reihe von Datenblöcken BL1, BL2, BL3, in denen jeweils eine oder mehrere Transaktionen TA zusammengefasst und mit der Prüfsumme #1, #2, #3 versehen sind. Eine Änderung von Daten erzeugt einen geänderten Zwischenwert, wodurch auch die Prüfsumme #1, #2, #3 des jeweiligen Datenblocks BL1, BL2, BL3 verändert wird. Der darauffolgende Datenblock BL1, BL2, BL3 passt somit nicht mehr zu dem vorangehenden Datenblock BL1, BL2, BL3. Daten eines einmal erfolgreich validierten Datenblocks BL1, BL2, BL3 sind dadurch für einen Angreifer nicht mehr veränderbar.

Neue Datenblöcke BL1, BL2, BL3 werden in regelmäßigen Zeitabständen erstellt. In das Datenfeld des neuen Datenblocks BL1, BL2, BL3 werden alle Transaktionen TA gespeichert, welche nach dem Zeitpunkt der erstellen des letzten Datenblocks BL1, BL2, BL3 erstellt wurden.

Die Komplexität der Blockerstellung kann dadurch erhöht werden, dass die erstellte Prüfsumme #1, #2, #3 ein vorgegebenes Format aufweisen muss. Beispielsweise wird festgelegt, dass die Prüfsumme 24 Stellen lang sein muss, wobei die ersten vier Stellen den Zahlenwert 0 aufweisen müssen. Hierfür wird neben dem Zwischenwert der Transaktionen TA und der Prüfsumme des vorherigen Datenblocks eine zu ermittelnde Zahlenfolge, als "Nonce" bezeichnet, mit einer festgelegten Länge zur Berechnung der Prüfsumme #1, #2. #3 des aktuellen Datenblocks BL1, BL2, BL3 verwendet. Die Berechnung der neuen Prüfsumme #1, #2, #3 dauert entsprechend länger, da nur wenige Noncen vorhanden sind, welche zur Berechnung einer Prüfsumme #1, #2, #3 mit den vorgegebenen Kriterien führen. Das Auffinden einer solchen geeigneten Nonce verursacht hierbei den beschriebenen zusätzlichen Zeitaufwand.

Nachdem die Prüfsumme #1, #2, #3 eines neuen Datenblocks BL1, BL2, BL3 erstellt wurde, wird der Datenblock an alle Teilnehmerknoten TK übermittelt. Die Teilnehmerknoten TK überprüfen nun die Prüfsumme #1, #2, #3 des neuen Datenblocks BL1, BL2, BL3. Erst nach erfolgreicher Validierung wird der Datenblock BL1, BL2, BL3 in allen Teilnehmerknoten TK gespeichert. Insbesondere wird hierzu eine erfolgreiche Validierung von mehr als der Hälfte aller Teilnehmerknoten TK benötigt. Ein Angreifer müsste daher zum Einschleusen/Erstellen eines fremden, schädlichen Datenblocks BL1, BL2, BL3 eine große Anzahl an Teilnehmerknoten TK manipulieren, bzw. kontrollieren, um den eingeschleusten Datenblock BL1, BL2, BL3 erfolgreich zu validieren. Bei steigender Anzahl an Teilnehmerknoten TK ist dies als so gut wie unmöglich anzusehen.

Für die Validierung eines Datenblocks BL1, BL2, BL3 ist ein wesentlich geringerer Aufwand als zur Erstellung des Datenblocks BL1, BL2, BL3 nötig. Die Prüfsumme #1, #2, #3 wird rückgerechnet, der Zwischenwert der Transaktionen TA, bzw. die Prüfsumme #1, #2, #3 des vorherigen Datenblocks BL1, BL2, BL3 zurückgewonnen und mit dem tatsächlichen Zwischenwert, bzw. mit der tatsächlichen Prüfsumme #1, #2, #3 des vorherigen Datenblock BL1, BL2, BL3 verglichen. Stimmen diese Werte überein, so ist der Datenblock BL1, BL2, BL3 erfolgreich validiert.

Im Folgenden ist beschrieben, wie mithilfe dieses Verfahrens Daten einer Anlage A der Prozessautomatisierung manipulationssicher gespeichert werden können:

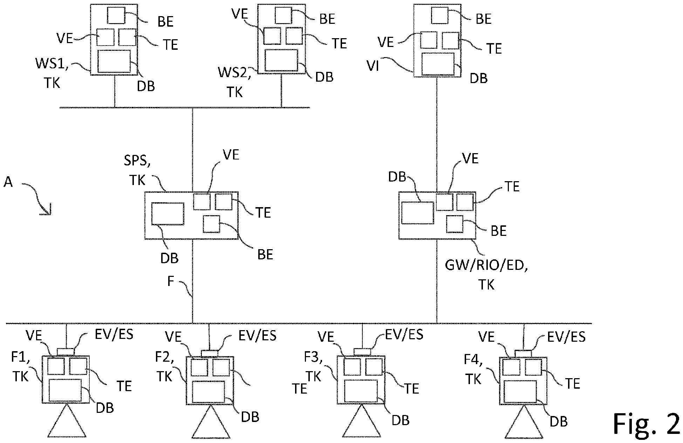

Fig. 2 zeigt eine Ausgestaltung des erfindungsgemäßen Systems. Hierbei ist eine Anlage A der Automatisierungstechnik dargestellt. An einem Kommunikationsnetzwerk F sind mehrere Rechnereinheiten WS1, WS2 in Form von Workstation-PCs in der Leitebene der Anlage A angeschlossen. Diese Rechnereinheiten dienen als übergeordnete Einheiten (Leitsystem bzw. Steuereinheit), unter anderem zur Prozessvisualisierung, Prozessüberwachung und zum Engineering wie zum Bedienen und Überwachen von Feldgeräten F1, F2, F3, F4. Über eine Steuereinheit SPS, die beispielsweise als speicherprogrammierbare Steuerung ausgestaltet ist und im Grunde genommen auch als übergeordnete Einheit bezeichnet wird, ist die Leitebene der Anlage A mit mehreren Feldgeräten F1, F2, F3, F4 verbunden. Bei den Feldgeräten F1, F2, F3, F4 kann es sich sowohl um Sensoren oder um Aktoren handeln. Der Feldbus FB arbeitet entsprechend nach einem der bekannten z.B. Feldbusstandards PROFIBUS, FOUNDATION Fieldbus oder HART. Anstatt des Feldbusses kann es auch um ein Local-Area-, oder um ein Wide-Area-Network, zum Beispiel das Internet, handeln. Des Weiteren eine Visualisierungseinheit VE zum Visualisieren von Prozessmesswerten oder Statuswerten der Feldgeräte F1, F2, F3, F4 über ein Linkdevice GW/RIO/ED, welches beispielsweise ein Gateway GW, eine Remote-IO RIO oder ein Edge Device ED sein kann, mit den Feldgeräten F1, F2, F3, F4, verbunden.

Jede der Komponenten, also die Workstation-PCs WS1, WS2, die Feldgeräte F1, F2, F3, F4, sowie die Steuereinheit SPS, das Linkdevice GW/RIO/ED und die Visualisierungseinheit VI bilden Teilnehmerknoten TK für ein Blockchain-Kommunikationsnetzwerk.

Jeder der Teilnehmerknoten TK besitzt eine Datenbank DB. Die Datenbanken DB sind derart ausgestaltet, dass in jedem Teilnehmerknoten TK jeweils eine der dezentral verteilten Datenbanken DB angeordnet ist. Die Datenbanken DB erhalten zu jedem Zeitpunkt alle Datenblöcke, so dass alle Datenbanken DB über die identische Datenmenge verfügen. Für die Datenbanken DB kommen insbesondere nichtflüchtige Speicher, wie Festplatten oder Solid-State-Drives (SSD), Speicherkarten oder Speichersticks zum Einsatz.

Jeder Teilnehmerknoten besitzt eine Transaktionserstellungseinheit TK, um Transaktionen TA konform den Anforderungen (siehe Fig. 1) zu erstellen. Die Transaktionen TA erhalten Daten der jeweiligen Teilnehmerknoten TK. Bei diesen Daten handelt es neben Messdaten der Feldgeräte F1, F2, F3, F4, welche Sensoren aufweisen, beispielsweise um Steuerdaten, bspw. zur Stellregelung eines Feldgeräts F1 F2, F3, F4, welches einen Aktor aufweist. Des Weiteren handelt es sich bei den Daten um Diagnose-, Historien-, und/oder Statusdaten, durch die der Anlagenbetreiber über Probleme der Feldgeräte, bzw. dem aktuellen Status der einzelnen Feldgeräte F1, F2, F3, F4 informiert wird.

Die Transaktionserstellungseinheiten TE sind in den Elektronikeinheiten der Teilnehmerknoten TK integriert. Es kann aber auch vorgesehen sein, die Transaktionserstellungseinheit TE auf modularen Zusatzelektronikeinheiten, insbesondere Steckmodulen, zur Verfügung zu stellen.

Diejenigen Teilnehmerknoten, TK welche über eine ausreichende Energieversorgung, bzw. über eine ausreichend große Rechenleistung verfügen, besitzen eine Blockerstellungseinheit BE, mit denen Datenblöcke BL1, BL2, BL3, wie oben beschrieben, erstellt werden.

Des Weiteren ist vorgesehen, dass jeder Teilnehmerknoten TK über eine Validierungseinheit VE verfügt. Mittels diesen Validierungseinheiten VE validieren die Teilnehmerknoten TK neu erstellte Datenblöcke BL1, BL2, BL3. Eine weitere Funktion der Validierungseinheiten VE ist, dass die erstellten Transaktionen TA vor dem Verarbeiten in einen Datenblock BL1, BL2, BL3 an alle Teilnehmerknoten TK übermittelt werden und von den Teilnehmerknoten TK validiert werden. Eine erstelle Transaktion TA wird nur dann in den Datenblock BL1, BL2, BL3 verarbeitet wird, wenn diese von zumindest einem der Teilnehmerknoten TK erfolgreich validiert wird. Hierbei wird insbesondere geprüft, ob der Ersteller der Transaktion TA ein gültiger Teilnehmerknoten TK ist, bzw. dass die in der Transaktion TA enthaltenen Daten beispielsweise in einem gültigen Wertebereich liegen.

Die Validierungseinheiten VE sind in den Elektronikeinheiten der Teilnehmerknoten TK integriert. Es kann aber auch vorgesehen sein, die Validierungseinheiten VE auf modularen Zusatzelektronikeinheiten, insbesondere Steckmodulen, zur Verfügung zu stellen. Des Weiteren kann vorgesehen sein, dass sich die Transaktionserstellungseinheiten TE und die Validierungseinheiten VE der Teilnehmerknoten in einer gemeinsamen Elektronikeinheit, bzw. in einer gemeinsamen Zusatzelektronikeinheit befinden. Der Platzbedarf wird dadurch reduziert, bzw. die Effizienz durch zusammenhängende Elektronikkomponenten erhöht.

Insbesondere die Feldgeräte F1, F2, F3, F4 verfügen häufig über eine geringe Energieversorgung. Aus diesem Grund ist es vorgesehen, nur dann Blockerstellungseinheiten BE in den Feldgeräten zu integrieren, wenn die Energieversorgung, bzw. die Rechenleistung der Feldgeräte F1, F2, F3, F4 hierfür ausreicht.

Herkömmlicherweise ist vorgesehen, dass die Feldgeräte F1, F2, F3, F4 jeweils eine Energieversorgungseinheit EV aufweisen, welche die Feldgeräte F1, F2, F3, F4, insbesondere die Elektronikeinheit der Feldgeräte F1, F2, F3, F4, mittels Energie, welche über das Kommunikationsnetzwerk F gewonnenen wird, versorgt. Da die Energieleistung wie oben beschrieben auf diesem Weg häufig nur gering ist kann vorgesehen sein, dass die Feldgeräte F1, F2, F3, F4, jeweils eine Energiespeichereinheit ES aufweisen, welche Energie aus der Umgebung aufnimmt und speichert und/oder Energie bereitstellt, und die Feldgeräte F1, F2, F3, F4,, insbesondere die Elektronikeinheit der Feldgeräte F1, F2, F3, F4, mit der gespeicherten, bzw. bereitgestellten Energie versorgt.

Beispielsweise wird die über das Kommunikationsnetzwerk F aufgenommene Energie wird in der Energiespeichereinheit ES zwischengespeichert. Es kann vorgesehen sein, die zwischengespeicherte Energie erst dann der Elektronikeinheit des entsprechenden Feldgeräts F1, F2, F3, F4 zur Verfügung zu stellen, wenn die zwischengespeicherte Energiemenge einen vorbestimmten Wert überschreitet, bzw. wenn der Energiespeicher komplett aufgeladen ist. Die Energiespeichereinheit verfügt hierbei über zumindest einen Kondensator und/oder einen Akkumulator. Beide Bauteile erlauben eine Energiespeicherung und eine Energieausgabe, ohne dass das Bauteil komplett geladen sein muss.

Es kann aber auch vorgesehen sein, dass die Energiespeichereinheit ES eine Solarzelle, eine Brennstoffzelle und/oder eine, insbesondere wiederaufladbare, Batterie umfasst. Die Energiespeichereinheit ES ist in diesem Fall unabhängig von dem Kommunikationsnetzwerk F.

Vorteilhaft ist es, die Energieversorgungseinheit EV mit der Energiespeichereinheit ES zu kombinieren. Im normalen Betriebsmodus wird das Feldgerät F1, F2, F3, F4 mit der vom Kommunikationsnetzwerk F zur Verfügung gestellten Energie über die Energieversorgungseinheit EV versorgt. Zum Ausführen einer Zusatzfunktionalität mittels der Transaktionserstellungseinheit TE und/oder der Validierungseinheit VE erhält das Feldgerät F1, F2, F3, F4 die zusätzlich benötigte Energie über die Energiespeichereinheit ES.

Zum Abschluss sind einige Vorteile des erfindungsgemäßen Systems noch einmal aufgeführt:
- Dezentrale Speicherung der Daten der Anlage A in mehreren Datenbanken DB statt in einer zentralen Datenbank DB, wodurch die Verletzlichkeit der Daten gesenkt wird;
- Integrität der Daten durch Verknüpfung der Datenblöcke BL1, BL2, BL3; und
- Durchlaufen mehrerer Validierungsvorgänge, wodurch nur den Anforderungen genügende Transaktionen TA, bzw. gültige Datenblöcke BL1, BL2, BL3 gespeichert werden.

Es versteht sich von selbst, dass die gezeigten Ausführungsbeispiele ausschließlich beispielhafter Natur sind und das erfindungsgemäße Verfahren mit jeglicher Art und Anordnung von Teilnehmerknoten TK in einer Anlage A der Prozessautomatisierung ausführbar ist.

### Bezugszeichenliste

- A: Anlage der Prozessautomatisierung
- BE: Blockerstellungseinheit
- BL1, BL2, BL3: Datenblock
- DB: Datenbank
- ED: Edge Device
- ES: Energiespeichereinheit
- EV: Energieversorgungseinheit
- F1, F2, F3, F4: Feldgerät
- F: Kommunikationsnetzwerk
- GW: Gateway
- RIO: Remote-IO
- SPS: Steuereinheit
- TA: Transaktion
- TE: Transaktionserstellungseinheit
- TK: Teilnehmerknoten
- VE: Validierungseinheit
- VI: Visualisierungseinheit
- WS1, WS2: Workstation-PC
- #1, #2, #3: Hashwerte der Datenblöcke

## Patentansprüche

1. System zum Bestimmen oder Überwachen einer Prozessgröße in einer Anlage (A) der Automatisierungstechnik mit zumindest einer übergeordneten Einheit (SPS) und einer Vielzahl von Feldgeräten (F1, F2, F3, F4), welche jeweils einen Sensor und/oder Aktor und eine Elektronikeinheit aufweisen, wobei die Feldgeräte (F1, F2, F3, F4) Daten generieren, bei denen es sich insbesondere um Messdaten, Steuerdaten, Kalibrier-/Parametrierdaten, Diagnose-, Historien- und/oder Statusdaten handelt, wobei die Feldgeräte (F1, F2, F3, F4) über ein drahtloses oder drahtgebundenes Kommunikationsnetzwerk (F) miteinander in Kommunikationsverbindung stehen, und wobei die übergeordnete Einheit (SPS) und die Feldgeräte (F1, F2, F3, F4) Teilnehmerknoten (TK) darstellen, dadurch charakterisiert, dass die Teilnehmerknoten nach einer Distributed Ledger, bzw. Blockchain-Technologie funktionieren und interagieren, umfassend:
- Eine Vielzahl von Transaktionserstellungseinheiten (TE), wobei die Transaktionserstellungseinheiten (TE) in den Elektronikeinheiten der Feldgeräte (F1, F2, F3, F4) integriert sind oder die Feldgeräte (F1, F2, F3, F4) modulare Zusatzelektronikeinheiten, insbesondere Steckmodule, aufweisen, in welchen die Transaktionserstellungseinheiten (TE) implementiert sind, wobei jedem der Feldgeräte (F1, F2, F3, F4) jeweils eine der Transaktionserstellungseinheiten (TE) zugeordnet ist, wobei die Transaktionserstellungseinheiten (TE) Transaktionen (TA) erstellen und wobei eine erstellte Transaktion (TA) Daten von den den Transaktionserstellungseinheiten (TE) jeweils zugeordneten Feldgeräten (F1, F2, F3, F4) enthält;
- Zumindest eine Blockerstellungseinheit (BE), welche in der übergeordneten Einheit (SPS) implementiert ist und welche in regelmäßigen Zeitabständen zumindest eine erstellte Transaktion (TA) zu einem Datenblock (BL1, BL2, BL3) verarbeitet;
- Eine Vielzahl von Validierungseinheiten (VE), welche den Datenblock (BL) und/oder die Transaktionen (TA) auf Validität überprüfen, wobei der Datenblock (BL1, BL2, BL3) dann gültig ist, wenn zumindest eine vorbestimmte Anzahl von Validierungseinheiten (VE) den Datenblock (BL1, BL2, BL3) erfolgreich validiert, und wobei jedem der Teilnehmerknoten (TK) jeweils eine der Validierungseinheiten (VE) zugeordnet ist; und
- Eine Vielzahl von dezentral verteilten Datenbanken (DB) zum Speichern von Datenblöcken (BL1, BL2, BL3), wobei der gültige Datenblock (BL1, BL2, BL3) in jeder der Datenbanken (DB) gespeichert wird.

2. System nach Anspruch 1, wobei der Datenblock (BL1, BL2, BL3) entsprechend einem Datenblock (BL1, BL2, BL3) der Blockchain-Technologie ausgestaltet ist und entsprechend der Blockchain-Technologie mit zu früheren Zeitpunkten erstellten Datenblöcken (BL1, BL2, BL3) verknüpft ist.

3. System nach zumindest einem der vorherigen Ansprüche, wobei in jedem Teilnehmerknoten (TK) jeweils eine der dezentral verteilten Datenbanken (DB) angeordnet ist.

4. System nach zumindest einem der vorherigen Ansprüche, wobei es sich bei der übergeordneten Einheit (SPS) um eine Steuereinheit, insbesondere um eine speicherprogrammierbare Steuerung, oder um einen Workstation-PC in der Leitebene der Anlage handelt.

5. System nach zumindest einem der vorherigen Ansprüche, wobei das System zusätzliche Teilnehmerknoten (TK) in Form von Gateways (GW), RIOs (RIO), und/oder Edge Devices (ED) umfasst, welche eine Blockerstellungseinheit (BE) und/oder eine Validierungseinheit (VE) enthalten.

6. System nach zumindest einem der vorherigen Ansprüche, wobei die Validierungseinheiten (VE) in den Elektronikeinheiten der Feldgeräte (F1, F2, F3, F4) und in der übergeordneten Einheit (SPS) integriert sind, oder die Feldgeräte (F1, F2, F3, F4) und/oder die übergeordnete Einheit (SPS) modulare Zusatzelektronikeinheiten, insbesondere Steckmodule, aufweisen, in welchen die Transaktionserstellungseinheiten (TE) implementiert sind.

7. System nach Anspruch 6, wobei sich die Transaktionserstellungseinheiten (TE) und die Validierungseinheiten (VE) der Feldgeräte (F1, F2, F3, F4) in einer gemeinsamen Elektronikeinheit, bzw. in einer gemeinsamen Zusatzelektronikeinheit befinden.

8. System nach zumindest einem der vorherigen Ansprüche, wobei die Feldgeräte (F1, F2, F3, F4) jeweils eine Energieversorgungseinheit (EV) aufweisen, welche die Feldgeräte (F1, F2, F3, F4), insbesondere die Elektronikeinheit der Feldgeräte (F1, F2, F3, F4), mittels Energie, welche über das Kommunikationsnetzwerk (F) gewonnenen wird, versorgt.

9. System nach zumindest einem der Ansprüche 1 bis 7, wobei die Feldgeräte (F1, F2, F3, F4) jeweils eine Energiespeichereinheit (ES) aufweisen, welche Energie aus der Umgebung aufnimmt und speichert und/oder Energie bereitstellt, und die Feldgeräte (F1, F2, F3, F4), insbesondere die Elektronikeinheit der Feldgeräte (F1, F2, F3, F4), mit der gespeicherten, bzw. bereitgestellten Energie versorgt.

10. System nach Anspruch 9, wobei die Energiespeichereinheit (ES) derart ausgestaltet ist, um Energie über das Kommunikationsnetzwerk (F) aufzunehmen.

11. System nach Anspruch 9, wobei die Energiespeichereinheit (ES) eine Solarzelle, eine Brennstoffzelle und/oder eine, insbesondere wiederaufladbare, Batterie umfasst, oder wobei die Energiespeichereinheit (ES) zumindest einen Kondensator und/oder einen Akkumulator umfasst.

12. System nach zumindest einem der vorherigen Ansprüche, wobei es sich bei dem Kommunikationsnetzwerk (F) um einen Feldbus der Automatisierungstechnik handelt, oder wobei es sich bei dem Kommunikationsnetzwerk (F) um ein Local-Area-Netzwerk oder um ein Wide-Area-Netzwerk, insbesondere um das Internet, handelt.

13. Verfahren zum Bestimmen oder Überwachen einer Prozessgröße in einer Anlage (A) der Automatisierungstechnik mit zumindest einer übergeordneten Einheit (SPS) und einer Vielzahl von Feldgeräten (F1, F2, F3, F4), welche jeweils einen Sensor und/oder Aktor und eine Elektronikeinheit aufweisen, wobei die Feldgeräte (F1, F2, F3, F4) Daten generieren, bei denen es sich insbesondere um Messdaten, Steuerdaten, Kalibrier-/Parametrierdaten, Diagnose-, Historien- und/oder Statusdaten handelt, wobei die Feldgeräte (F1, F2, F3, F4) über ein Kommunikationsnetzwerk miteinander in Kommunikationsverbindung stehen, und wobei die übergeordnete Einheit (SPS) und die Feldgeräte (F1, F2, F3, F4) Teilnehmerknoten (TK) darstellen, **dadurch gekennzeichnet, dass** die Teilnehmerknoten (TK) nach der Blockchain-Technologie funktionieren und interagieren, umfassend:
- Erstellen zumindest einer Transaktion (TA) mittels Transaktionserstellungseinheiten (TE), wobei die Transaktion (TA) zumindest eine Teilmenge der von den Feldgeräten (F1, F2, F3, F4) generierten Daten enthält wobei die Transaktionserstellungseinheiten (TE) in den Elektronikeinheiten der Feldgeräte (F1, F2, F3, F4) integriert sind oder die Feldgeräte (F1, F2, F3, F4) modulare Zusatzelektronikeinheiten, insbesondere Steckmodule, aufweisen, in welchen die Transaktionserstellungseinheiten (TE) implementiert sind;
- Verarbeiten der erstellten Transaktion (TA) in einen Datenblock (BL1, BL2, BL3) mittels einer Blockerstellungseinheit (BE) welche in der übergeordneten Einheit (SPS) implementiert ist;
- Übermitteln des erstellten Datenblocks (BL1, BL2, BL3) an jeden der Teilnehmerknoten (TK) über das Kommunikationsnetzwerk;
- Validieren des Datenblocks (BL1, BL2, BL3) durch alle Teilnehmerknoten (TK), wobei der Datenblock (BL1, BL2, BL3) dann gültig ist, wenn zumindest die Hälfte aller Teilnehmerknoten (TK) den Datenblock (BL) erfolgreich validiert; und
- Speichern des gültigen Datenblocks (BL1, BL2, BL3) in einer Vielzahl von dezentral verteilten Datenbanken (DB).

14. Verfahren nach Anspruch 13, wobei die erstellte Transaktion (TA) vor dem Verarbeiten in den Datenblock (BL1, BL2, BL3) an alle Teilnehmerknoten (TK) übermittelt wird und von den Teilnehmerknoten (TK) validiert wird und wobei die erstelle Transaktion (TA) nur dann in den Datenblock (BL1, BL2, BL3) verarbeitet wird, wenn diese von zumindest einem der Teilnehmerknoten (TK) erfolgreich validiert wird.

15. Verfahren nach zumindest einem der Ansprüche 13 oder 14, wobei ein potentieller Teilnehmerknoten (TK) eine Teilnahmeanfrage an alle Teilnehmerknoten (TK) übermittelt und erst dann als neuer Teilnehmerknoten (TK) integriert wird, wenn zumindest eine vorbestimmte Anzahl von Teilnehmerknoten (TK) die Teilnahmeanfrage erfolgreich validiert.

## Claims

1. System for determining or monitoring a process variable in an automation technology installation (A) with at least a higher-level unit (SPS) and a multitude of field devices (F1, F2, F3, F4), which each have a sensor, and/or an actuator and an electronics unit, wherein the field devices (F1, F2, F3, F4) generate data, specifically measurement data, control data, calibration/parameterization data, diagnostic data, history data and/or status data, wherein the field devices (F1, F2, F3, F4) have a communication connection with one another via a wired or wireless communication network (F), and wherein the higher-level unit (SPS) and the field devices (F1, F2, F3, F4) constitute user nodes (TK), **characterized in that** the user nodes function and interact according to a Distributed Ledger or Blockchain technology, said system comprising:
- A multitude of transaction creation units (TE), wherein the transaction creation units (TE) are integrated into the electronic units of the field devices (F1, F2, F3, F4) or the field devices (F1, F2, F3, F4) have modular additional electronic units, particularly plug-in modules, in which the transaction creation units (TE) are implemented, wherein one of the transaction creation units (TE) is assigned to each of the field devices (F1, F2, F3, F4), wherein the transaction creation units (TE) create transactions (TA) and wherein a created transaction (TA) contains data from the field devices (F1, F2, F3, F4) respectively assigned to the transaction creation units (TE);
- At least one block creation unit (BE), which is implemented in the higher-level unit (SPS) and which processes at least one created transaction (TA) for a data block (BL1, BL2, BL3) at regular intervals;
- A multitude of validation units (VE), which check the validity of the data block (BL) and/or the transactions (TA), wherein the data block (BL1, BL2, BL3) is valid if at least a predefined number of validation units (VE) successfully validate the data block (BL1, BL2, BL3), and wherein one of the validation units (VE) is assigned, respectively, to each of the user nodes (TK), and
- A multitude of decentralized databases (DB) designed to save data blocks (BL1, BL2, BL3), wherein the valid data block (BL1, BL2, BL3) is saved in each of the databases (DB).

2. System as claimed in Claim 1, wherein the data block (BL1, BL2, BL3) is designed according to a data block (BL1, BL2, BL3) of Blockchain technology and is linked to data blocks (BL1, BL2, BL3) created earlier in accordance with Blockchain technology.

3. System as claimed in at least one of the previous claims, wherein one of the decentralized databases (DB) is arranged in each user node (TK).

4. System as claimed in at least one of the previous claims, wherein the higher-level unit (SPS) is a control unit, particularly a programmable logic controller, or a workstation PC at the command level of the installation.

5. System as claimed in at least one of the previous claims, wherein the system comprises additional user nodes (TK) in the form of gateways (GW), RIOs (RIO) and/or Edge Devices (ED), which contain a block creation unit (BE) and/or a validation unit (VE).

6. System as claimed in at least one of the previous claims, wherein the validation units (VE) are integrated into the electronic units of the field devices (F1, F2, F3, F4) and in the higher-level unit (SPS), or the field devices (F1, F2, F3, F4) and/or the higher-level unit (SPS) have modular additional electronic units, particularly plug-in modules, in which the transaction creation units (TE) are implemented.

7. System as claimed in Claim 6, wherein the transaction creation units (TE) and the validation units (VE) of the field devices (F1, F2, F3, F4) are located in a common electronic unit, or in a common additional electronic unit.

8. System as claimed in at least one of the previous claims, wherein the field devices (F1, F2, F3, F4) each have an energy supply unit (EV), said unit supplying energy to the field devices (F1, F2, F3, F4), particularly the electronic unit of the field devices (F1, F2, F3, F4), said energy being obtained via the communication network (F).

9. System as claimed in at least one of the Claims 1 to 7, wherein the field devices (F1, F2, F3, F4) each comprise an energy storage unit (ES), which captures and saves energy from the environment and/or provides energy, and which provides the field devices (F1, F2, F3, F4), particularly the electronic unit of the field devices (F1, F2, F3, F4), with the energy that is saved or provided.

10. System as claimed in Claim 9, wherein the energy storage unit (ES) is designed to capture energy via the communication network (F).

11. System as claimed in Claim 9, wherein the energy storage unit (ES) comprises a solar cell, a fuel cell and/or a battery, particularly a rechargeable battery, or wherein the energy storage unit (ES) comprises at least a capacitor and/or an accumulator.

12. System as claimed in at least one of the previous claims, wherein the communication network (F) is a field device used in automation engineering, or wherein the communication network (F) is a local area network or a wide area network, particularly the Internet.

13. Procedure designed to determine or monitor a process variable in an automation engineering installation (A) with at least one higher-level unit (SPS) and a multitude of field devices (F1, F2, F3, F4), which each comprise a sensor and/or an actuator and an electronic unit, wherein the field devices (F1, F2, F3, F4) generate data, particularly measurement data, control data, calibration/parameterization data, diagnostic data, history data and/or status data, of the field devices (F1, F2, F3, F4), wherein the field devices have a communication connection with one another via a communication network, and wherein the higher-level unit (SPS) and the field devices (F1, F2, F3, F4) constitute user nodes (TK), **characterized in that** the user nodes (TK) function and interact according to Blockchain technology, said procedure comprising:
- Creation of at least one transaction (TA) using the transaction creation units (TE), wherein the transaction (TA) contains at least a subset of the data generated by the field devices (F1, F2, F3, F4), wherein the transaction creation units (TE) are integrated into the electronic units of the field devices (F1, F2, F3, F4) or the field devices (F1, F2, F3, F4) have modular additional electronic units, particularly plug-in modules, in which the transaction creation units (TE) are implemented;
- Processing of the created transaction (TA) in a data block (BL1, BL2, BL3) using a block creation unit (BE), which is implemented in the higher-level unit (SPS) ;
- Communication of the data block (BL1, BL2, BL3) that has been created to each of the user nodes (TK) via the communication network;
- Validation of the data block (BL1, BL2, BL3) by all the user nodes (TK), wherein the data block (BL1, BL2, BL3) is valid if at least half of all the user nodes (TK) successfully validate the data block (BL); and
- Storage of the valid data block (BL1, BL2, BL3) in a multitude of decentralized databases (DB).

14. Procedure as claimed in Claim 13, wherein the transaction (TA) created is transmitted to all the user nodes (TK) before processing in the data block (BL1, BL2, BL3) and is validated by the user nodes, and wherein the transaction (TA) created is only processed in the data block (BL1, BL2, BL3) if the transaction is successfully validated by at least one of the user nodes (TK).

15. Procedure as claimed in at least one of the Claims 13 or 14, wherein a potential user node (TK) transmits a participation request to all the user nodes (TK) and is only integrated as a new user node (TK) if at least a predefined number of user nodes (TK) successfully validate the participation request.

## Revendications

1. Système destiné à la détermination ou la surveillance d'une grandeur de process dans une installation (A) de la technique d'automatisation avec au moins une unité maître (SPS) et une pluralité d'appareils de terrain (F1, F2, F3, F4), les appareils de terrain (F1, F2, F3, F4) générant des données concernant lesquelles il s'agit notamment de données de mesure, de données de commande, de données d'étalonnage / de paramétrage, de données de diagnostic, historiques et/ou d'état, les appareils de terrain (F1, F2, F3, F4) étant en liaison de communication entre eux via un réseau de communication (F) sans fil ou filaire, et l'unité maître (SPS) et les appareils de terrain (F1, F2, F3, F4) constituant des nœuds de participants (TK), **caractérisé en ce que** les nœuds de participants fonctionnent et interagissent d'après une technologie Distributed Ledger ou Blockchain, lequel système comprend :
- Une pluralité d'unités de création de transactions (TE) sont intégrées dans les unités électroniques des appareils de terrain (F1, F2, F3, F4) ou les appareils de terrain (F1, F2, F3, F4) présentant des unités électroniques additionnelles modulaires, notamment des modules enfichables, l'une des unités de création de transactions (TE) étant attribuée à chacun des appareils de terrain (F1, F2, F3, F4), les unités de création de transactions (TE) créant des transactions (TA) et une transaction (TA) créée contenant des données provenant des appareils de terrain (F1, F2, F3, F4) attribués respectivement aux unités de création de transactions (TE) ;
- Au moins une unité de création de blocs (BE), laquelle est implémentée dans l'unité maître (SPS) et laquelle transforme à intervalles réguliers au moins une transaction créée (TA) en un bloc de données (BL1, BL2, BL3) ;
- Une pluralité d'unités de validation (VE), lesquelles vérifient le bloc de données (BL) et/ou les transactions (TA) par rapport à la validité, le bloc de données (BL1, BL2, BL3) étant valable lorsqu'au moins un nombre prédéterminé d'unités de validation (VE) valident avec succès le bloc de données (BL1, BL2, BL3), et l'une des unités de validation (VE) étant attribuée respectivement aux nœuds de participants (TK), et
- Une pluralité de bases de données (DB) décentralisées destinées à la mémorisation des blocs de données (BL1, BL2, BL3), le bloc de données (BL1, BL2, BL3) valable étant mémorisé dans chacune des bases de données (DB).

2. Système selon la revendication 1, pour lequel le bloc de données (BL1, BL2, BL3) est conçu selon un bloc de données (BL1, BL2, BL3) de la technologie Blockchain et est combiné avec les blocs de données (BL1, BL2, BL3) créés à des instants antérieurs selon la technologie Blockchain.

3. Système selon au moins l'une des revendications précédentes, pour lequel l'une des bases de données (DB) décentralisées est disposée respectivement dans chacun des nœuds de participants (TK).

4. Système selon au moins l'une des revendications précédentes, pour lequel il s'agit, concernant l'unité maître (SPS), d'une unité de commande, notamment d'un automate programmable, ou d'une station de travail PC dans le niveau commande de l'installation.

5. Système selon au moins l'une des revendications précédentes, pour lequel le système comprend des nœuds de participants (TK) supplémentaires sous la forme de passerelles (GW), RIOs (RIO) et/ou Edge Devices (ED), lesquels contiennent une unité de création de blocs (BE) et/ou une unité de validation (VE).

6. Système selon au moins l'une des revendications précédentes, pour lequel les unités de validation (VE) sont intégrées dans les unités électroniques des appareils de terrain (F1, F2, F3, F4) et dans l'unité maître (SPS), ou les appareils de terrain (F1, F2, F3, F4) et l'unité maître (SPS) comprennent des unités électroniques additionnelles modulaires, notamment des modules enfichables, dans lesquels les unités de création de transactions (TE) sont implémentées.

7. Système selon la revendication 6, pour lequel les unités de création de transaction (TE) et les unités de validation (VE) des appareils de terrain (F1, F2, F3, F4) se trouvent dans une unité électronique commune, ou dans une unité électronique additionnelle commune.

8. Système selon au moins l'une des revendications précédentes, pour lequel les appareils de terrain (F1, F2, F3, F4) comprennent chacun une unité d'alimentation en énergie (EV), laquelle unité alimente les appareils de terrain (F1, F2, F3, F4), notamment l'unité électronique des appareils de terrain (F1, F2, F3, F4) au moyen d'énergie, laquelle est obtenue par le biais du réseau de communication (F).

9. Système selon au moins l'une des revendications 1 à 7, pour lequel les appareils de terrain (F1, F2, F3, F4) comprennent chacun une unité d'accumulation d'énergie (ES), laquelle unité absorbe et accumule l'énergie provenant de l'environnement et/ou la met à disposition, et laquelle unité alimente les appareils de terrain (F1, F2, F3, F4), notamment l'unité électronique des appareils de terrain (F1, F2, F3, F4) avec l'énergie accumulée ou mise à disposition.

10. Système selon la revendication 9, pour lequel l'unité d'accumulation d'énergie (ES) est conçue de telle sorte à absorber l'énergie par le biais du réseau de communication (F).

11. Système selon la revendication 9, pour lequel l'unité d'accumulation d'énergie (ES) comprend une cellule solaire, une pile à combustible et/ou une batterie, notamment rechargeable, ou pour lequel l'unité d'accumulation d'énergie (ES) comprend au moins un condensateur et/ou un accumulateur.

12. Système selon au moins l'une des revendications précédentes, pour lequel il s'agit, concernant le réseau de communication (F), d'un appareil de terrain de la technique d'automatisation, ou pour lequel il s'agit, concernant le réseau de communication (F), d'un réseau local ou d'un réseau étendu, notamment d'Internet.

13. Procédé destiné à la détermination ou la surveillance d'une grandeur de process dans une installation (A) de la technique d'automatisation avec au moins une unité maître (SPS) et une pluralité d'appareils de terrain (F1, F2, F3, F4), qui comprennent chacun un capteur et/ou un actionneur et une unité électronique, les appareils de terrain (F1, F2, F3, F4) générant des données concernant lesquelles il s'agit notamment de données de mesure, de données de commande, de données d'étalonnage / de paramétrage, de données de diagnostic, historiques et/ou d'état, les appareils de terrain (F1, F2, F3, F4) étant en liaison de communication entre eux via un réseau de communication, et l'unité maître (SPS) et les appareils de terrain (F1, F2, F3, F4) constituant des nœuds de participants (TK), **caractérisé en ce que** les nœuds de participants (TK) fonctionnent et interagissent d'après la technologie Blockchain, lequel procédé comprend :
- Création d'au moins une transaction (TA) au moyen d'unités de création de transactions (TE), la transaction (TA) contenant au moins une quantité partielle des données générées par les appareils de terrain (F1, F2, F3, F4), les unités de création de transactions (TE) étant intégrées dans les unités électroniques des appareils de terrain (F1, F2, F3, F4) ou les appareils de terrain (F1, F2, F3, F4) comprenant des unités électroniques additionnelles modulaires, notamment des modules enfichables, dans lesquelles sont implémentées les unités de création de transaction (TE) ;
- Transformation de la transaction (TA) créée en un bloc de données (BL1, BL2, BL3) au moyen d'une unité de création de blocs (BE), laquelle unité est implémentée dans l'unité maître (SPS) ;
- Transmission du bloc de données (BL1, BL2, BL3) créé à chacun des nœuds de participants (TK) via le réseau de communication ;
- Validation du bloc de données (BL1, BL2, BL3) par tous les nœuds de participants (TK), le bloc de données (BL1, BL2, BL3) étant valable si au moins la moitié de tous les nœuds de participants (TK) valident avec succès le bloc de données (BL) ; et
- Mémorisation du bloc de données (BL1, BL2, BL3) valable dans une pluralité de bases de données (DB) décentralisées.

14. Procédé selon la revendication 13, pour lequel la transaction (TA) créée est transmise à l'ensemble des nœuds de participants (TK) avant la transformation en bloc de données (BL1, BL2, BL3) et est validée par les nœuds de participants, et pour lequel la transaction (TA) créée n'est transformée en bloc de données (BL1, BL2, BL3) que si celle-ci a été validée avec succès par au moins l'un des nœuds de participants (TK).

15. Procédé selon au moins l'une des revendications 13 ou 14, pour lequel un nœud de participants (TK) potentiel transmet une demande de participation à tous les nœuds de participants (TK) et n'est intégré comme nouveau nœud de participants (TK) que si au moins un nombre prédéterminé de nœuds de participants (TK) valident avec succès la demande de participation.
